# FASCICULE DE BREVET EUROPEEN

(11) **EP 1 615 502 B1**
(45) Date de publication et mention de la délivrance du brevet: **23.03.2016**
(21) Numéro de dépôt: 04742342.1
(22) Date de dépôt: 24.03.2004
(51) Int. Cl.: A23B 7/154, A23B 7/16, A23L 3/3481, A23L 3/3472, A23J 7/00

(54) **PROCEDE DE TRAITEMENT DE FRUITS ET LEGUMES A BASE DE LECITHINES**
VERFAHREN ZUR BEHANDLUNG VON OBST UND GEMÜSE DURCH LECITHINE
METHOD FOR PROCESSING FRUITS AND VEGETABLES ON THE BASE OF LECITHIN

(30) Priorité: 08.04.2003 FR 0304350; 15.07.2003 FR 0308628
(43) Date de publication de la demande: 18.01.2006
(73) Titulaire: XEDA INTERNATIONAL, 13670 Saint-Andiol (FR)
(72) Inventeur: SARDO, Alberto, F-13160 Chateaurenard (FR)
(74) Mandataire: Colombet, Alain André
(86) Numéro de dépôt international: PCT/FR2004/000734
(87) Numéro de publication internationale: WO 2004/091301

(56) Documents cités:
- EP-A- 1 106 070
- WO-A-00/32054
- NL-C- 132 984
- US-A- 3 451 826
- US-A- 4 604 288
- US-A- 5 126 155
- US-B1- 6 403 139
- US-B1- 6 514 551

## Description

La présente invention concerne l'utilisation d'un ou plusieurs lécithines et/ou dérivés pour le traitement des fruits et légumes et les nouvelles compositions comprenant un ou plusieurs lécithines, en combinaison avec un ou plusieurs agents de traitement des fruits et légumes, notamment des terpène(s) à fonction hydroxyle présentant des propriétés antioxydantes, bactéricides et/ou fongicides.

Avant récolte, les fruits et légumes sont traités par divers agents tels que les engrais ou insecticides afin de favoriser leur croissance.

Après leur récolte, les fruits et légumes frais sont stockés pendant une période qui peut être relativement longue, avant d'être mis sur le marché pour une consommation rapide.

Au cours de cette période de stockage, il importe que les fruits et légumes ne perdent ni leurs qualités organoleptiques ni leur aspect engageant. Il est donc souhaitable de retarder le vieillissement des fruits et légumes pendant le stockage.

De façon à retarder le plus possible une telle dégradation des fruits et légumes, il est connu de les traiter, juste après récolte, par des traitements physiques, tels que la chaleur (thermothérapie par exemple), ou le froid (l'hydrocooling ou la frigoconservation, par exemple), et/ou par des traitements chimiques, au moyen de substances antioxydantes, bactéricides et/ou fongicides. Les substances antioxydantes, bactéricides et/ou fongicides les plus utilisées sont des produits de synthèse qui présentent une certaine toxicité pour le consommateur : c'est notamment le cas de la diphénylamine, l'orthophénylphénol, commercialisé par BASF, l'imazalil (1-(2-(2,4-dichloro-phényl)-2-(2-propényloxy)éthyl)-1 H-imidazole), disponible commercialement, par exemple auprès de Janssen Pharmaceutica ou Inchem, ou encore l'éthoxyquine (1,2-dihydro-6-éthoxy-2,2,4triméthylquinoléine) commercialisée par exemple par Raschig.

On connaît un procédé de traitement de fruits et légumes par application de terpènes dioxygénés tels que l'eugénol ou l'isoeugénol, ce procédé étant décrit dans FR 98 15 305. Ces composés protègent les fruits et légumes contre les bactéries et les champignons, et les tubercules de pommes de terre et les bulbes d'oignons contre la germination.

Cependant, les traitements physiques et/ou chimiques des fruits et légumes tels que ceux indiqués plus haut présentent une phytotoxicité à l'égard des fruits et légumes traités.

On entend par « phytotoxicité », selon l'invention toute atteinte aux fruits et légumes, résultant de l'action directe du traitement physique et/ou chimique, s'illustrant par la modification de l'aspect visuel desdits fruits et légumes ou leurs feuilles.

De préférence selon l'invention, « phytotoxicité » désigne l'altération directe par ledit traitement de l'intégrité de la peau desdits fruits et légumes, notamment par modification de la couleur ou de la texture de leur peau. Plus particulièrement, la phytotoxicité peut s'illustrer par une coloration homogène jaunâtre, une pigmentation rousse, la formation de tâches jaunes ou brunes ou des zones de nécroses, ponctuelles ou étendues, ou encore la formation de microlésions sur la peau.

Ces microlésions constituent alors un terrain propice aux moisissures ou au pourrissement des fruits et légumes.

Selon l'invention, ladite phytotoxicité définie plus haut résulte directement de l'action dudit traitement et exclut par conséquent les phénomènes naturels de vieillissement, tels que la sénescence notamment.

Du fait de cette phytotoxicité, les traitements des fruits et légumes présentent donc une action contradictoire qui en limite l'utilisation.

Les lécithines sont des mélanges de combinaisons d'esters des acides oléique, stéarique, palmitique avec l'acide glycérophosphorique et la choline.

Les lécithines sont des agents surfactants et émulsifiants d'origine naturelle, couramment utilisés. Les lécithines sont largement utilisées en tant qu'additifs alimentaires, pharmaceutiques ou cosmétiques.

Or, de façon inattendue, il a maintenant été découvert selon la présente invention que les lécithines ou leurs dérivés limitaient l'effet phytotoxique des traitements physiques et/ou chimiques des fruits et légumes, notamment les agents de traitement tels que l'eugénol ou l'isoeugénol.

Spécifiquement, l'emploi de lécithines ou dérivés selon l'invention a un effet phytoprotecteur en retardant ou empêchant la formation de taches ou microlésions provoquées par les traitements physiques et /ou chimiques, notamment les agents de traitement tels que l'eugénol ou l'isoeugénol.

Selon un premier objet, la présente invention concerne donc l'utilisation des lécithines et/ou leurs dérivés pour limiter la phytotoxicité des traitements physiques et/ou chimiques de fruits et légumes, telle que :
- les traitements physiques sont effectués au moyen de la chaleur ou du froid et choisis parmi la thermothérapie, la frigoconservation ou l'hydrocooling ;
- les traitements chimiques consistent en agents de traitement, choisis parmi les engrais foliaires à base de chlorure de calcium, le tolyfluanide, la diphénylamine, l'orthophénylphénol, l'imazalil, l'éthoxyquine, les terpènes à fonction hydroxyle présentant des fonctions antioxydantes et/ou fongicides, et
- les lécithines et/ou dérivés et le(s)dit(s) traitement(s) sont appliqués de façon simultanée, séparée ou étalée dans le temps..

Selon un second objet, la présente invention concerne les compositions comprenant la combinaison d'un ou plusieurs agents de traitement des fruits et légumes, choisis parmi les engrais foliaires à base de chlorure de calcium, le tolyfluanide, la diphénylamine, l'orthophénylphénol, l'imazalil, l'éthoxyquine, les terpènes à fonction hydroxyle présentant des fonctions antioxydantes et/ou fongicides, et un ou plusieurs lécithines et/ou dérivés, en solution dans une base huilée, les lécithines et/ou dérivés ayant une concentration strictement supérieure à 5% dans les compositions.

Selon un autre objet, la présente invention concerne également l'utilisation des compositions selon l'invention pour le traitement des fruits et légumes.

Il est également décrit que la conservation des lécithines et/ou dérivés selon l'invention était nettement améliorée par la présence d'un ou plusieurs agents de traitement selon l'invention, notamment lesdits agents présentant des propriétés bactéricides, fongicides ou antioxydantes tel que l'eugénol. Dans ce cas, le(s)dit(s) agent(s) de traitement représentent 1 à 50 %, de préférence 10 à 30% en poids desdits lécithines et/ou dérivés.

Est donc également décrite l'utilisation d'un ou plusieurs agents de traitement pour améliorer la conservation des lécithines et /ou dérivés

Par « traitement physique et/ou chimique des fruits et légumes », on entend tout type de traitement habituellement utilisé pour améliorer la croissance et/ou la conservation des fruits et légumes avant et/ou après récolte, et présentant généralement une phytotoxicité à leur égard.

Tel que discuté plus haut, la phytotoxicité ne comprend pas la sénescence naturelle ; par conséquent, les traitements physiques et/ou chimiques provoquant un phénomène de vieillissement, notamment par augmentation de la respiration par libération d'éthylène comme l'éthéphon, ne sont pas compris par l'invention.

Il est entendu que les traitements chimiques peuvent être utilisés en combinaison avec les traitements physiques.

Les traitements physiques incluent notamment le traitement à la chaleur, par exemple entre 20 et 60°C, tel que la thermothérapie, par exemple au moyen d'eau chaude, ou au froid, par exemple entre 0 et 20°C, tel que l'hydrocooling ou la frigoconservation, au moyen d'air froid. Les traitements chimiques désignent tous les agents de traitement habituellement utilisés à ces fins. Ceux-ci incluent notamment les engrais, insecticides, fongicides, bactéricides, antioxydants ou conservateurs.

A titre d'agent de traitement utilisé avant récolte, on peut notamment citer les produits utilisés au verger tels que les engrais foliaires à base de chlorure de calcium, comme Stopit, commercialisé par Phosyne plc, le tolyfluanide, disponible sous le nom Méthyleuparène®, commercialisé par Bayer, ou encore toute autre spécialité utilisée au verger comme par exemple les huiles minérales habituellement utilisées, éventuellement en combinaison avec un ou plusieurs produits phytosanitaires, connus en soi.

En tant qu'agents de traitement post-récolte, on peut citer des produits divers comme la diphénylamine, l'orthophénylphénol, commercialisé par BASF, l'imazalil (1-(2-(2,4-dichlorophényl)-2-(2-propényloxy)éthyl)-1 H-imidazole), disponible commercialement, par exemple auprès de Janssen Pharmaceutica ou Inchem, ou encore l'éthoxyquine (1,2-dihydro-6-éthoxy-2,2,4triméthyl-quinoléine) commercialisée par exemple par Raschig.

On préfère également en tant qu'agents de traitement les dérivés d'origine naturelle tels que les terpènes à fonction hydroxyle présentant des fonctions antioxydantes, bactéricides et/ou fongicides.

Par "terpène à fonction hydroxyle", on entend selon l'invention des terpènes présentant au moins une fonction hydroxyle, éventuellement phénolique. Dans la suite, on désigne également le terpène à fonction hydroxyle par l'expression "principe actif terpénique". De préférence, les terpènes utilisables selon l'invention contiennent 1 à 5, mieux encore 1, 2 ou 3 fonctions hydroxyle.

De manière préférée, les terpènes utilisés présentent une tension de vapeur d'au moins 0,1 mm de mercure, mieux encore comprise entre 0,1 mm et 5 mm de mercure.

Comme exemple de terpènes, on citera le farnésol, le menthol, le linalool, le p-menthan-1,8-diol, le terpinéol, le citronellol, le géraniol, l'eugénol, l'isoeugénol , un de leurs sels acceptables d'un point de vue alimentaire et leurs mélanges.

A titre de terpène particulièrement préféré, on peut mentionner l'eugénol, l'isoeugénol, leurs sels acceptables d'un point de vue alimentaire et leurs mélanges.

Il doit être entendu que, selon un mode de réalisation plus particulièrement préféré, on utilise à titre de principe actif de l'huile de girofle, celle-ci contenant de 60% à 75% d'eugénol.

Selon un mode de réalisation préféré, les compositions selon l'invention contiennent un ou plusieurs agents de traitement tels que définis ci-dessus.

Dans certains cas, les terpènes peuvent être appliqués soit comme produits purs, soit sous forme d'huiles naturelles contenant entre 50% et 80% de terpènes.

Selon l'invention, on entend par l'expression "lécithines et/ou dérivés" un ou plusieurs composés choisis parmi les dérivés de phosphatidylcholine et/ou ses dérivés, tels que phosphatidylcholine, phosphatidylinositol, phosphatidyl-éthanolamine et/ou acide phosphatidique, et/ou leurs mélanges présentant deux acides gras, tels que distéaryl-, dipalmityl- et/ou dioléyl- de phosphatidylcholine, phosphatidylinositol, phosphatidyléthanolamine et/ou acide phosphatidique, et/ou leurs mélanges.

Préférentiellement, les "lécithines et/ou dérivés" sont d'origine naturelle, tels que, par exemple, issus du jaune d'oeuf ou du soja.

Les inventeurs ont également découvert que les "lysolécithines et/ou dérivés" présentent une meilleure solubilité lors de leur formulation, seuls ou en mélange dans les compositions selon l'invention.

Selon un aspect préféré, les "lécithines et/ou dérivés" contiennent donc un ou plusieurs "lysolécithines et/ou dérivés".

On entend par "lysolécithines et/ou dérivés" les composés résultant de l'élimination d'un acide gras des "lécithines et/ou dérivés" mentionnés plus haut.

Ils incluent donc notamment les dérivés lysophosphatidylcholine, lyso-phosphatidylinositol, lysophosphatidyléthanolamine et/ou acide lyso-phosphatidique, et/ou leurs mélanges. Habituellement, lorsqu'ils sont employés en tant qu'additifs, comme, par exemple, agents émulsifiants ou surfactants, les lécithines sont généralement présents à des concentrations faibles, telles qu'entre 1% et 5%.

Il a maintenant été démontré par les inventeurs que, contre toute attente, les "lécithines et/ou dérivés" pouvaient être utilisés à des concentrations plus importantes, supérieures ou égales à 10% pour obtenir l'effet phytoprotecteur recherché. Plus préférentiellement, les lécithines ont une concentration strictement supérieure à 5%. De préférence, la concentration des lécithines et/ou dérivés dans les compositions est comprise entre plus de 5% et 50%.

Selon l'invention, les lécithines et/ou dérivés et les agents de traitement peuvent être appliqués simultanément, séparément ou de façon étalée dans le temps. Les lécithines et/ou dérivés peuvent donc être formulés seuls ou en mélange avec un ou plusieurs agents de traitement, dans les compositions selon l'invention.

En particulier, le rapport de "lécithines et/ou dérivés" à l'agent de traitement, de préférence un principe actif terpénique, peut être compris entre 0,3 et 3, préférentiellement entre 0,5 et 1,5.

Selon un aspect préféré, les "lécithines et/ou dérivés" selon l'invention incluent les lécithines E322 ou les lécithines issues de l'huile de soja.

Selon un aspect particulièrement préféré selon l'invention, les "lécithines et/ou dérivés" contiennent au moins un ou plusieurs "lysolécithines et/ou dérivés". Généralement, les "lécithines et/ou dérivés" sont choisis parmi les composés distéaryl-, dipalmityl- et/ou dioléyl- de phosphatidyl-choline, -inositol, et/ou -éthanolamine, acide phosphatidique et les composés lyso correspondants et/ou leurs mélanges.

Avantageusement, les "lécithines et/ou dérivés" contiennent entre 30% et 60% de "lysolécithines et/ou dérivés". Notamment, on préfère des mélanges de lécithines issues de l'huile de soja, modifiées et non modifiées.

Préférentiellement, les "lécithines et/ou dérivés" sont obtenus par extraction d'huile végétale, suivie de l'élimination de l'huile et de l'hydrolyse au moins partielle des groupements d'acides gras.

Selon un aspect avantageux, on utilise en tant que "lécithines et/ou dérivés" Emultop HL50^{®} commercialisé par Degussa.

Les "lécithines et/ou dérivés" contenant au moins un "lysolécithine et/ou dérivé" selon l'invention étant solubles dans les huiles d'origine végétale, les compositions selon l'invention permettent donc d'employer uniquement des produits d'origine naturelle. L'utilisation de solvants organiques ou autres additifs synthétiques habituellement utilisés pour améliorer la mise en solution ou stabilisation des compositions est donc superflue. Ceci garantit donc l'absence de toxicité pour le consommateur. Cela permet également la vente des compositions sous le label biologique.

Les compositions selon l'invention peuvent être diluées dans une base aqueuse ou organique, ou leur mélange.

A titre de base organique, on peut notamment utiliser toute huile acceptable du point de vue alimentaire, telle que les huiles végétales, l'huile de soja ou d'arachide en particulier.

Généralement, les lécithines et/ou dérivés peuvent être formulés seuls, ou dans de l'eau, ou dans une huile végétale, éventuellement avec des émulsifiants ou dispersants de synthèse non ionique, du type acide oléique éthoxylé par exemple.

Préférentiellement, lorsqu'on utilise des lécithines et/ou dérivés naturels, ceux-ci sont formulés avec ou sans huile végétale et des dispersants comme ceux indiqués ci-dessus.

Lorsqu'on utilise des lécithines et/ou dérivés contenant un ou plusieurs lysolécithines et/ou dérivés, ceux-ci peuvent être formulés en outre en solution dans une huile végétale sans émulsifiant.

Lorsqu'on utilise EMULTOP HL50®, on peut alors formuler les lécithines et/ou dérivés seuls, dispersés dans l'eau, de préférence jusqu'à un maximum de 20%.

De préférence, les lécithines et/ou dérivés seuls ou en mélange avec les agents de traitement dans les compositions selon l'invention sont appliqués sur les fruits et légumes à des concentrations comprises entre 10 et 5000 ppm, de préférence entre 100 et 500 ppm.

Pour cela, les formulations de lécithines et/ou dérivés peuvent être diluées dans une dispersion aqueuse. Préférentiellement, la dose d'application est comprise entre 1 et 50 litres/ tonne de dispersion aqueuse pour un traitement après récolte et entre 100 et 2000 litres par hectare en pré-récolte.

Les lécithines et/ou dérivés peuvent être appliqués aux fruits et légumes par tout moyen connu en soi, par exemple par pulvérisation au verger avant récolte ou douchage ou immersion après récolte.

Les compositions selon l'invention contiennent entre 5% et 70% en poids d'agent de traitement, de préférence un principe actif terpénique, préférentiellement entre 10% et 30%, encore plus préférentiellement entre 15% et 20%, ; entre 1% et 50% en poids de "lécithines et/ou dérivés" selon l'invention, préférentiellement entre 10% et 40%, encore plus préférentiellement entre 10% et 30% ; et entre 10% et 70% de base aqueuse ou organique, de préférence organique, de préférence entre 30% et 60%.

Plus préférentiellement, les compositions contiennent de l'eugénol avec strictement plus de 5% de lécithines.

Les pourcentages indiqués ci-dessus et ci-dessous s'entendent en poids, par rapport aux ingrédients actifs. Les ingrédients actifs étant disponibles commercialement sous forme liquide ou solide diluée, les quantités de ces formes diluées doivent être ajustées à la hausse en conséquence.

Par exemple, les "lécithines et/ou dérivés" peuvent se présenter sous forme diluée dans une poudre contenant entre 40% et 75% de lécithines ou dérivés. Les pourcentages indiqués s'entendent par rapport aux "lécithines et/ou dérivés" non dilués.

Selon un mode préféré, les compositions selon l'invention comprennent une combinaison d'eugénol ou d'isoeugénol, de préférence l'eugénol avec un mélange de lécithines ou dérivés contenant un ou plusieurs "lysolécithines et/ou dérivés", en mélange dans une huile végétale.

Généralement, les compositions selon l'invention contiennent de 10% à 30% d'eugénol, 10% à 40% de "lécithines et/ou dérivés" contenant un ou plusieurs "lysolécithines et/ou dérivés", 30% à 60% d'huile végétale.

Avantageusement, les "lécithines et/ou dérivés" contiennent entre 30% et 60% de "lysolécithines et/ou dérivés".

Préférentiellement, les compositions selon l'invention contiennent entre 10% et 40% d'Emultop HL50^{®}, plus préférentiellement entre 20% et 30%.

Les compositions selon l'invention contiennent entre 5% et 15% de "lysolécithines et/ou dérivés".

Avantageusement, on utilise des "lécithines et/ou dérivés" non modifiés, chacun en mélange avec leur forme modifiée correspondante.

Généralement, le mélange de chaque "lécithine et/ou dérivé" non modifié avec sa forme modifiée est compris entre 0,3% et 10% des compositions selon l'invention.

Les compositions sont préparées par mélange des lécithines ou dérivés dans l'huile végétale, à température ambiante de préférence, puis par l'ajout, sous agitation, du ou des agents de traitement. Si nécessaire, les compositions obtenues sont laissées à reposer pendant un temps compris entre quelques heures et plusieurs jours avant utilisation.

La formulation de la composition traitante dépend de son mode d'application sur les fruits et légumes.

Préférentiellement, les compositions sont diluées dans l'eau dans une concentration comprise entre 1 et 20 l par m³ d'eau, préalablement au traitement des fruits et légumes.

Les compositions traitantes sont préparées de façon conventionnelle en soi par simple mélange de leurs constituants.

Les compositions selon l'invention doivent être appliquées une ou plusieurs fois. Selon un aspect avantageux, un seul traitement est effectué.

Préférentiellement, le traitement est mis en oeuvre aussitôt après récolte.

La quantité de composition traitante devant être appliquée aux fruits et légumes dépend de la nature des fruits et légumes concernés et du mode d'application sélectionné. Généralement, la consommation de solution diluée est comprise entre 1 et 50 litres, de préférence entre 5 et 20 litres par tonne de fruits traités, préférentiellement environ 10 litres par tonne de fruits ou légumes traités.

Le mode d'application des lécithines et/ou dérivés seuls ou en mélange avec le(s) agent(s) de traitement dans les compositions selon l'invention est quelconque selon l'invention. On distingue plus particulièrement l'application par pulvérisation, notamment avant récolte ou par immersion, par douchage, par aspersion ou par enrobage à l'aide d'un papier absorbant imbibé de composition traitante, notamment après récolte. On préfère l'application par immersion, douchage ou aspersion après récolte. De préférence, lorsque l'application a lieu après récolte, elle est effectuée à température comprise entre 15°C et 60°C, de préférence entre 30° et 60°C par les procédés décrits ci-après.

En variante, ladite application peut être réalisée par immersion ou douchage par mise en oeuvre de l'étape consistant à :
- porter la composition traitante à une température de 15 à 60°C, de préférence 30° à 60°C ; et
- soumettre, pendant au plus dix minutes, lesdits fruits et légumes à un traitement par douchage avec ladite composition traitante, ou par immersion dans ladite composition traitante, et ceci avant stockage des fruits et légumes.

Généralement, on opère par douchage sur banc des fruits et légumes. Dans le cas de fruits et légumes particulièrement sensibles aux chocs, on préfère opérer par immersion des fruits et légumes en caisse dans les compositions traitantes.

La température à laquelle est chauffée la composition traitante est ajustée en fonction de la nature du produit traité. De fait, il importe de ne pas provoquer la cuisson ou la dégradation des fruits et légumes. Seule la surface des fruits et légumes doit être chauffée par mise au contact avec la composition traitante.

De façon générale, on porte la composition traitante à une température comprise entre 15° et 60°C, de préférence 30 et 60°C, selon la nature des fruits et légumes traités, et on ajuste parallèlement le temps de mise en contact de façon à atteindre la température souhaitée en surface des fruits et légumes.

Généralement, on opère entre 45° et 50°C. Cependant, pour les fruits et légumes sensibles à la chaleur tels que le citron par exemple, on préfère des températures comprises entre 30° et 40°C.

Le temps de mise en contact est très court et dans tous les cas inférieur à 10 minutes. Il varie généralement entre 30 secondes et 10 minutes, avantageusement entre 30 secondes et 5 minutes. Un temps de contact de 2 à 3 minutes est le plus souvent suffisant.

Lorsque la durée de traitement par la composition chaude est atteinte, il est mis fin à l'application par tous moyens connus, notamment par simple arrêt de l'aspersion ou du douchage.

Dans une variante avantageuse, en particulier dans le cas de fruits et de légumes sensibles à la chaleur, le procédé peut comprendre une étape ultérieure consistant à refroidir rapidement les fruits et légumes qui ont été mis au contact de la composition traitante chaude, et ce jusqu'à une température inférieure ou égale à la température ambiante.

Ce refroidissement peut être réalisé par circulation d'air ou par contact avec de l'eau (notamment immersion ou aspersion) dont la température est inférieure ou égale à la température ambiante.

Dans le cas de fruits et légumes particulièrement sensibles à la chaleur, tels que les pêches, abricots, tomates et poires, il est recommandé de les refroidir au préalable avant de procéder au traitement à chaud par ladite composition traitante.

Ainsi, selon un mode de réalisation préféré de l'invention, l'étape d'immersion ou de douchage décrite ci-dessus est précédée d'une étape de refroidissement à coeur par douchage avec une composition aqueuse de refroidissement ou par immersion dans une composition aqueuse de refroidissement, ladite composition aqueuse de refroidissement présentant une température comprise entre 0° et 15°C.

Le refroidissement doit prendre effet au coeur même des fruits et légumes. Les fruits et légumes sont par exemple soumis à un traitement par hydrocooling. Ceci peut être réalisé par douchage avec une composition aqueuse de refroidissement ou bien par immersion dans une composition aqueuse de refroidissement.

La température de la composition aqueuse de refroidissement est généralement comprise entre 0° et 15°C.

La température et le temps de pré-traitement par la composition de refroidissement sont ajustés de façon à refroidir la totalité des fruits ou légumes traités et pas seulement leur couche externe. Ces paramètres dépendent principalement de la nature des fruits et légumes. A titre d'indication, on notera que la température de la composition de refroidissement est inférieure ou égale à la température conventionnelle de stockage préconisée dans la technique.

Selon un mode de réalisation préféré, la composition aqueuse de refroidissement présente une température de 0° à 10°C, mieux encore de 0° à 5-6°C. La durée de pré-traitement par la composition aqueuse de refroidissement est généralement comprise entre 2 minutes et 2 heures, le plus souvent entre 2 minutes et 60 minutes, par exemple entre 4 minutes et 30 minutes.

Cette variante est plus particulièrement décrite dans les demandes FR 96 03 100 et FR 98 09 995.

En variante et selon un mode de réalisation préféré de l'invention, la composition traitante utilisée dans le cas de l'application par douchage ou immersion est une dispersion dans l'eau de la composition.

Lorsqu'un papier absorbant est utilisé, une quantité de 0,01 g à 1 g de principe actif par m² de papier suffit généralement, étant entendu qu'un m² de papier permet d'enrober de 16 à 25 fruits.

Plus généralement, la quantité de principe actif dépend de la volatilité (et donc de la tension de vapeur) du ou des agents de traitement utilisés comme principe actif et de la durée de stockage.

Bien évidemment, les modes de réalisation préférés indiqués ci-avant ou ci-après s'entendent pris isolément ou en combinaison.

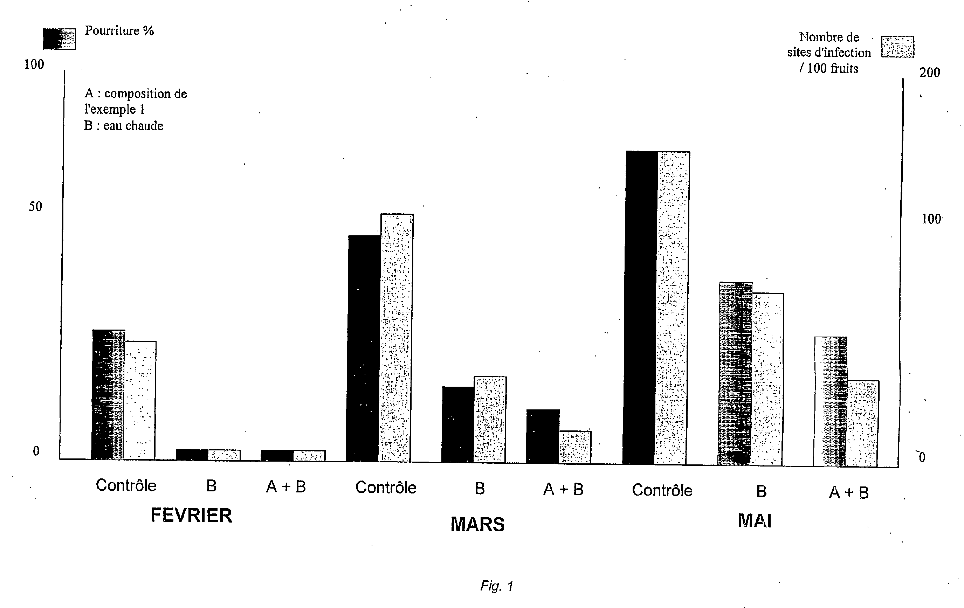

L'invention est notamment illustrée par les exemples et la Figure 1 suivants.

La Figure 1 illustre l'effet des compositions selon l'invention sur les pourritures de pommes.

### Exemple 1 :

Une composition selon l'invention a été préparée de la façon suivante. 27 g d'un mélange de lécithines et/ou dérivés contenant entre environ 40% et 75% de lécithines ou dérivés dont environ 50% de lysolécithines ou dérivés (Emultop HL50^{®}) sont mis en solution dans 55 g d'huile végétale (soja), à température ambiante. On ajoute ensuite, à température ambiante, sous agitation constante, 18 g ml d'eugénol. On obtient ainsi 100 g de solution huileuse reconstituée.

La solution obtenue est parfaitement claire. Elle contient 18% d'eugénol, 27% d'Emultop HL50^{®}, soit environ 10% à 20% de lécithines ou dérivés et 55% d'huile végétale.

### Exemple 2 :

La procédure de l'exemple 1 est répétée, mais cette fois avec des lécithines et/ou dérivés non modifiés. On obtient une suspension. L'eugénol est ajouté de façon identique. La solution est trouble. 10% à 30% d'agent dispersant de type anionique, cationique ou non-ionique sont alors nécessaires pour améliorer l'homogénéité de la dispersion de la composition dans l'eau.

### Exemple 3 : Traitement de pommes Granny Smith :

Un premier lot de pommes Granny Smith a été traité après récolte par immersion ou douchage à l'aide d'une composition traitante selon l'exemple 1, diluée dans de l'eau à 50°C, à raison de 2 g/l exprimée en eugénol, soit 11 g/l de composition à 18% en eugénol.

Après traitement, ce lot a été stocké à 0,5°C pendant trois mois dans un frigidaire à atmosphère modifiée à 2% d'oxygène et 2,5% d'anhydride carbonique (CO₂).

Deux lots témoins ont été soumis aux mêmes conditions de stockage que le lot précédent, sans traitement des pommes (contrôle) ou avec uniquement l'eau.

L'application a lieu pendant 3 minutes.

Les résultats résumés à la figure 1 montrent que les compositions de l'invention réduisent de plus de 50% les pourritures apparaissant sur les fruits deux à quatre mois suivant l'application.

### Exemple 4 (comparatif) :

Des oranges de la variété Washington Navel ont été traitées avec différentes doses d'eugénol seul et à différentes températures.

Après 15 jours à environ 50°C suivis de 3 jours à température ambiante, les fruits atteints de pourriture à penicillium ont été comptés.

Les résultats sont résumés dans le tableau suivant.

**Tableau 1**

| | % de fruits présentant une pourriture à penicillium |
|---|---|
| Contrôle (eau froide) | 8 |
| Eau chaude 36°C | 8 |
| Eau chaude 50°C | 3 |
| Eugénol 9000 ppm (solution à 30 g/l) 50°C | 29 |
| Eugénol 5000 ppm (solution à 17 g/l) 36°C | 13 |
| Eugénol 5000 ppm (solution à 17g/l) 46,5°C | 22 |

Les résultats montrent que le traitement avec l'eugénol seul favorise les pourritures.

### Exemple 5

L'exemple 4 a été répété avec la composition de l'exemple 1. Le pourcentage de fruits traités avec cette composition qui présentent une pourriture à penicillium s'élève alors à 4%.

Au vu des résultats des exemples 4 et 5, il peut être conclu que l'eugénol provoque des microlésions qui présentent un terrain favorable à l'attaque de pénicillium ; cette phytotoxicité de l'eugénol est pratiquement supprimée lorsque l'eugénol est utilisé en combinaison avec des lécithines selon l'invention.

### Exemple 6

100 pommes Golden ont été traitées avec ou sans les lécithines de l'exemple 1 à une concentration de 2000ppm, à 50°C avant stockage, puis stockées en chambre froide pendant 7 mois à 0,5°C.

Les pommes non traitées ont présenté une coloration jaune tandis que ce changement de couleur n'est pas apparu pour les pommes traitées.

### Exemple 7

Des oranges Valencia Late sont traitées avec ou sans les lécithines de l'exemple 1 à une concentration de 2000ppm, et stockées pendant 3 mois à 3,5°C.

Les oranges non traitées présentent des dommages liés au froid (« chilling injuries »), absents chez les pommes traitées.

## Revendications

1. Utilisation de lécithines et/ou dérivés pour réduire la phytotoxicité des traitements physiques et/ou chimiques des fruits et légumes, telle que :
- les traitements physiques sont effectués au moyen de la chaleur ou du froid et choisis parmi la thermothérapie, la frigoconservation ou l'hydrocooling ;
- les traitements chimiques consistent en agents de traitement, choisis parmi les engrais foliaires à base de chlorure de calcium, le tolyfluanide, la diphénylamine, l'orthophénylphénol, l'imazalil, l'éthoxyquine, les terpènes à fonction hydroxyle présentant des fonctions antioxydantes et/ou fongicides, et
- les lécithines et/ou dérivés et le(s)dit(s) traitement(s) sont appliqués de façon simultanée, séparée ou étalée dans le temps.

2. Utilisation selon la revendication 1, telle que lesdits lécithines et/ou dérivés contiennent un ou plusieurs lysolécithines et/ou dérivés.

3. Utilisation selon l'une quelconque des revendications précédentes, telle que lesdits lécithines et/ou dérivés contiennent entre 30% et 60% de lysolécithines et/ou dérivés.

4. Utilisation selon l'une quelconque des revendications précédentes, telle que les lécithines et/ou dérivés sont choisis parmi les composés distéaryl-, dipalmityl-, ou dioléyl- de phosphatidyl-choline, -inositol, -éthanolamine ou d'acide phosphatique, et éventuellement les dérivés lyso correspondants, ou leurs mélanges.

5. Utilisation selon l'une quelconque des revendications précédentes telle que les lécithines et/ou dérivés sont formulés en solution aqueuse ou dans une huile végétale, puis dilués dans une dispersion aqueuse avant traitement.

6. Utilisation selon l'une quelconque des revendications précédentes telle que les lécithines et/ou dérivés sont appliqués auxdits fruits et légumes à une dose comprise entre 10 et 5000 ppm.

7. Utilisation selon l'une quelconque des revendications 1 à 6 telle que les agents de traitement sont choisis parmi les engrais, insecticides, fongicides, bactéricides, antioxydants ou conservateurs.

8. Utilisation selon l'une quelconque des revendications 1 à 7, telle que les agents de traitement sont tels que définis dans les revendications 15 à 17.

9. Compositions contenant un ou plusieurs agents de traitement de fruits et légumes choisis parmi les engrais foliaires à base de chlorure de calcium, le tolyfluanide, la diphénylamine, l'orthophénylphénol, l'imazalil, l'éthoxyquine, les terpènes à fonction hydroxyle présentant des fonctions antioxydantes et/ou fongicides, et un ou plusieurs lécithines et/ou dérivés, en solution dans une base huilée, les lécithines et/ou dérivés ayant une concentration strictement supérieure à 5% dans lesdites compositions.

10. Compositions selon la revendication 9, telles que lesdits agents de traitement et lécithines sont formulés pour une administration de façon simultanée, séparée ou étalée dans le temps.

11. Compositions selon la revendication 9 ou 10, telles que les agents de traitement sont des terpènes à fonction hydroxyle présentant des fonctions antioxydantes et/ou fongicides.

12. Compositions selon l'une quelconque des revendications 9 à 11, telles que lesdits terpènes à fonction hydroxyle sont choisis parmi l'eugénol, l'isoeugénol, le farnésol, le menthol, le linalool, le p-menthan-1,8-diol, le terpinéol, le citronellol, le géraniol, un de leurs sels acceptables sur le plan alimentaire ou leurs mélanges.

13. Compositions selon l'une quelconque des revendications 9 à 12, telles que lesdits terpènes à fonction hydroxyle sont choisis parmi l'eugénol, l'isoeugénol, leurs sels acceptables sur le plan alimentaire ou leurs mélanges.

14. Compositions selon la revendication 13, telle que la base huilée est une huile végétale.

15. Compositions selon l'une quelconque des revendications 9 à 14, telles qu'elles contiennent entre 5% et 70% desdits agents de traitement, 1% et 50% de lécithines et/ou dérivés, 10% et 70% de base huilée.

16. Compositions selon l'une quelconque des revendications 9 à 15 contenant 10% à 30% d'eugénol, 10% à 40% de lécithines et/ou dérivés, 30% à 60% d'huile végétale.

17. Compositions selon la revendication 16, **caractérisées en ce qu'**elles contiennent entre 5% et 15% de lysolécithines et/ou dérivés.

18. Compositions selon l'une quelconque des revendications 9 à 17, **caractérisées en ce que** le rapport de lécithines et/ou dérivés par rapport audit agent de traitement est compris entre 0,3 et 3.

19. Compositions selon la revendication 18, **caractérisées en ce que** le rapport est compris entre 0, 5 et 1,5.

20. Compositions selon l'une quelconque des revendications 9 à 19 telles que lesdits lécithines et/ou dérivés sont tels que définis dans l'une quelconque des revendications 1 à 8.

21. Utilisation d'une composition selon l'une quelconque des revendications 9 à 20 pour le traitement des fruits et légumes.

22. Procédé de traitement des fruits et légumes comprenant l'application auxdits fruits et légumes d'une composition selon l'une quelconque des revendications 9 à 20.

23. Procédé selon la revendication 22, **caractérisé en ce que** la composition est diluée dans l'eau à raison de 1 à 20 l/m³ d'eau.

24. Procédé selon la revendication 22 ou 23 tel que ladite composition est préalablement diluée dans l'eau et appliquée à une température comprise entre 30° et 60°C.

25. Procédé selon l'une quelconque des revendications 22 à 24 comprenant l'application de la composition par immersion, douchage, aspersion ou enrobage à l'aide d'un papier absorbant.

26. Procédé selon l'une quelconque des revendications 22 à 25 pour lequel l'application de la composition a lieu après récolte.

27. Procédé selon l'une quelconque des revendications 22 à 26 pour lequel l'application de la composition a lieu avant récolte, par pulvérisation.

28. Procédé de traitement des fruits et légumes comprenant l'application auxdits fruits et légumes de lécithines et/ou dérivés tels que définis selon l'une quelconque des revendications 1 à 8, avant, après ou simultanément au traitement physique choisi parmi la thermothérapie, la frigoconservation ou l'hydrocooling .

29. Procédé de préparation d'une composition selon l'une quelconque des revendications 9 à 20 comprenant l'addition des lécithines ou dérivés à la base huilée suivie de l'addition de(s)dit(s) agent(s) de traitement.

## Patentansprüche

1. Verwendung von Lecithinen und/oder Derivaten zum Reduzieren der Phytotoxizität der physikalischen und/oder chemischen Behandlungen der Obst und Gemüse, wobei:
- die physikalischen Behandlungen mittels Wärme oder Kälte durchgeführt werden und aus Thermotherapie, Kühlkonservierung oder Hydro Cooling ausgewählt sind;
- die chemischen Behandlungen aus Mitteln zur Behandlung bestehen, welche aus Blattdüngermitteln auf Basis von Kalziumchlorid, Tolyfluanid, Diphenylamin, Orthophenylphenol, Imazalil, Ethoxyquin, Terpenen mit Hydroxy-Funktion aufweisend antioxidative und/oder fungizide Funktionen ausgewählt sind, und
- die Lecithine und/oder Derivate und die Behandlung(en) gleichzeitig, getrennt oder über einen Zeitraum hin verabreicht sind.

2. Verwendung nach Anspruch 1, wobei die Lecithine und/oder die Derivate ein oder mehrere Lysolecithine und/oder Derivate aufweisen.

3. Verwendung nach einem der vorhergehenden Ansprüche, wobei die Lecithine und/oder Derivate zwischen 30% bis 60% Lysolecithine und/oder Derivate aufweisen.

4. Verwendung nach einem der vorhergehenden Ansprüche, wobei die Lecithine und/oder Derivate aus den Verbindungen Distearyl-, Dipalmityl-, oder Dioleyl- Phosphatidyl-Cholin, -Inositol, -Ethanolamin oder Phosphatidsäure und gegebenenfalls den entsprechenden Lyso-Derivaten, oder Mischungen davon ausgewählt sind.

5. Verwendung nach einem der vorhergehenden Ansprüche, wobei die Lecithine und/oder Derivate in wässriger Lösung oder in einem pflanzlichen Öl formuliert, dann in einer wässrigen Dispersion vor der Behandlung verdünnt sind.

6. Verwendung nach einem der vorhergehenden Ansprüche, wobei die Lecithine und/oder Derivate auf die Obst und Gemüse mit einer Dosis zwischen 10 bis 5000 ppm verabreicht sind.

7. Verwendung nach einem der Ansprüche 1 bis 6, wobei die Mittel zur Behandlung aus Düngermitteln, Insektiziden, Fungiziden, Bakteriziden, Antioxiden oder Konservierungsmitteln ausgewählt sind.

8. Verwendung nach einem der Ansprüche 1 bis 7, wobei die Mittel zur Behandlung wie in den Ansprüchen 15 bis 17 definiert sind.

9. Zusammensetzungen aufweisend ein oder mehrere Mittel zur Behandlung von Obst und Gemüsen, ausgewählt aus Blattdüngermitteln auf Basis von Kalziumchlorid, Tolyfluanid, Diphenylamin, Orthophenylphenol, Imazalil, Ethoxyquin, Terpenen mit Hydroxy-Funktion aufweisend antioxidative und/oder fungizide Funktionen, und ein oder mehrere Lecithin(e) und/oder Derivat(e) in Lösung in einer Ölbasis, wobei die Lecithine und/oder Derivate eine Konzentration streng höher als 5% in den Zusammensetzungen aufweisen.

10. Zusammensetzungen nach Anspruch 9, wobei die Mittel zur Behandlung und die Lecithine für eine gleichzeitige, getrennte oder über einen Zeitraum hin durchgeführte Verabreichung formuliert sind.

11. Zusammensetzungen nach einem der Ansprüche 9 oder 10, wobei die Mittel zur Behandlung Terpene mit Hydroxy-Funktionen aufweisend antioxidative und/oder fungizide Funktionen sind.

12. Zusammensetzungen nach einem der Ansprüche 9 bis 11, wobei die Terpene mit Hydroxy-Funktionen aus Eugenol, Isoeugenol, Farnesol, Menthol, Linalool, p-Menthan-1,8-Diol, Terpineol, Citronellol, Geraniol, einem in Nahrungsmitteln annehmbaren Salz davon oder Mischungen davon ausgewählt sind.

13. Zusammensetzungen nach einem der Ansprüche 9 bis 12, wobei die Terpene mit Hydroxy-Funktionen aus Eugenol, Isoeugenol, einem in Nahrungsmitteln annehmbaren Salz davon oder Mischungen davon ausgewählt sind.

14. Zusammensetzungen nach Anspruch 13, wobei die Ölbasis ein pflanzliches Öl ist.

15. Zusammensetzungen nach einem der Ansprüche 9 bis 14, wobei sie zwischen 5% und 70% Mittel zur Behandlung, 1% und 50% Lecithine und/oder Derivate, 10% und 70% Ölbasis aufweisen.

16. Zusammensetzungen nach einem der Ansprüche 9 bis 15 aufweisend 10% bis 30% Eugenol, 10% bis 40% Lecithine und/oder Derivate, 30% bis 60% pflanzliches Öl.

17. Zusammensetzungen nach Anspruch 16, **dadurch gekennzeichnet, dass** sie zwischen 5% und 15% Lysolecithine und/oder Derivate aufweisen.

18. Zusammensetzungen nach einem der Ansprüche 9 bis 17, **dadurch gekennzeichnet, dass** das Verhältnis von Lecithinen und/oder Derivaten in Bezug auf das Mittel zur Behandlung zwischen 0,3 und 3 liegt.

19. Zusammensetzungen nach Anspruch 18, **dadurch gekennzeichnet, dass** das Verhältnis zwischen 0,5 und 1,5 liegt.

20. Zusammensetzungen nach einem der Ansprüche 9 bis 19, wobei die Lecithine und/oder Derivate wie in einem der Ansprüche 1 bis 8 definiert sind.

21. Verwendung einer Zusammensetzung nach einem der Ansprüche 9 bis 20 zur Behandlung von Obst und Gemüsen.

22. Verfahren zur Behandlung von Obst und Gemüsen aufweisend die Verabreichung einer Zusammensetzung nach einem der Ansprüche 9 bis 20 auf das Obst und Gemüse.

23. Verfahren nach Anspruch 22, **dadurch gekennzeichnet, dass** die Zusammensetzung im Wasser verdünnt ist, und zwar in 1 bis 20 1/m³ Wasser.

24. Verfahren nach Anspruch 22 oder 23, wobei die Zusammensetzung vorher im Wasser verdünnt ist und bei einer Temperatur zwischen 30°C bis 60°C verabreicht ist.

25. Verfahren nach einem der Ansprüche 22 bis 24 aufweisend die Verabreichung der Zusammensetzung durch Eintauchen, Besprühen, Besprengen oder Umhüllen mittels eines absorbierenden Papiers.

26. Verfahren nach einem der Ansprüche 22 bis 25, wobei die Verabreichung der Zusammensetzung nach der Ernte erfolgt.

27. Verfahren nach einem der Ansprüche 22 bis 26, wobei die Verabreichung der Zusammensetzung vor der Ernte durch Besprühen erfolgt.

28. Verfahren zur Behandlung von Obst und Gemüsen aufweisend die Verabreichung von Lecithinen und/oder Derivaten wie in einem der Ansprüche 1 bis 8 definiert auf das Obst und Gemüse, vor, danach oder gleichzeitig zu der physikalischen Behandlung ausgewählt aus Thermotherapie, Kühlkonservierung oder Hydro Cooling.

29. Verfahren zur Vorbereitung einer Zusammensetzung nach einem der Ansprüche 9 bis 20 aufweisend das Hinzufügen der Lecithine oder Derivate auf Ölbasis gefolgt von dem Hinzufügen des/der Mittel(s) zur Behandlung.

## Claims

1. Use of lecithins and/or derivatives in order to reduce the phytotoxicity of the physical and/or chemical treatments for fruit and vegetables, such that :
the physical treatments are carried out by means of heat or cold and are chosen from thermotherapy, refrigeration or hydrocooling;
the chemical treatments consist of treatment agents selected from the foliar fertilisers based on calcium chloride, tolyfluanid, diphenylamine, orthophenylphenol, imazalil, ethoxyquine, hydroxyl-function terpenes having antioxidant and/or fungicidal functions; and
the lecithins and/or derivatives and the treatment(s) are applied simultaneously, separately or staggered over time.

2. Use according to claim 1, such that the lecithins and/or derivatives contain one or more lysolecithins and/or derivatives.

3. Use according to any one of the preceding claims, such that the lecithins and/or derivatives contain between 30% and 60% of lysolecithins and/or derivatives.

4. Use according to any one of the preceding claims, such that the lecithins and/or derivatives are selected from the distearyl, dipalmityl or dioleyl compounds of phosphatidylcholine, phosphatidylinositol, phosphatidylethanolamine or phosphatic acid and optionally the corresponding lyso derivatives or the mixtures thereof

5. Use according to any one of the preceding claims, such that the lecithins and/or derivatives are formulated in an aqueous solution or in a vegetable oil, then diluted in an aqueous dispersion before treatment.

6. Use according to any one of the preceding claims, such that the lecithins and/or derivatives are applied to the fruit and vegetables at a dose of between 10 and 5000 ppm.

7. Use according to any one of claims 1 to 6, such that the treatment agents are selected from fertilisers, insecticides, fungicides, bactericides, antioxidants or preservatives.

8. Use according to any one of claims 1 to 7, such that the treatment agents are as defined in claims 15 to 17.

9. Compositions containing one or more treatment agents for fruit and vegetables selected from the foliar fertilisers based on calcium chloride, tolyfluanid, diphenylamine, orthophenylphenol, imazalil, ethoxyquine, hydroxyl-function terpenes having antioxidant and/or fungicidal functions, and one or more lecithins and/or derivatives
in solution in an oil base,
where the concentration of said lecithins and/or derivatives being strictly more than 5% in said compositions..

10. Compositions according to claim 9, such that the treatment agents and lecithins are formulated in order to be administered simultaneously, separately or staggered over time.

11. Compositions according to claim 9 or 10, such that the treatment agents are hydroxyl-function terpenes having antioxidant and/or fungicidal functions.

12. Compositions according to any one of claims 9 to 11, such that the hydroxyl-function terpenes are selected from eugenol, isoeugenol, farnesol, menthol, linalool, p-menthan-1,8-diol, terpineol, citronellol, geraniol, one of the salts thereof which are acceptable in foodstuffs or mixtures thereof.

13. Compositions according to any one of claims 9 to 12, such that the hydroxyl-function terpenes are selected from eugenol, isoeugenol, the salts thereof which are acceptable in foodstuffs or mixtures thereof.

14. Compositions according to claim 13, such that the oil base is a vegetable oil.

15. Compositions according to any one of claims 9 to 14, such that they contain between 5% and 70% of treatment agents, 1% and 50% of lecithins and/or derivatives, 10% and 70% of oil base.

16. Compositions according to any one of claims 9 to 15, containing from 10% to 30% of eugenol, from 10% to 40% of lecithins and/or derivatives, from 30% to 60% of vegetable oil.

17. Compositions according to claim 16, **characterised in that** they contain between 5% and 15% of lysolecithins and/or derivatives.

18. Compositions according to any one of claims 9 to 17, **characterised in that** the ratio of lecithins and/or derivatives relative to the treatment agent is from 0.3 to 3.

19. Compositions according to claim 18, **characterised in that** the ratio is from 0.5 to 1.5.

20. Compositions according to any one of claims 9 to 19, such that the lecithins and/or derivatives are as defined in any one of claims 1 to 8.

21. Use of a composition according to any one of claims 9 to 20 for treating fruit and vegetables.

22. Method for treating fruit and vegetables comprising the application to the fruit and vegetables of a composition according to any one of claims 9 to 20.

23. Method according to claim 22, **characterised in that** the composition is diluted in water at a ratio of from 1 to 20 l/m³ of water.

24. Method according to claim 22 or claim 23, such that the composition is diluted beforehand in water and applied at a temperature of from 30º to 60ºC.

25. Method according to any one of claims 22 to 24, comprising the application of the composition by means of immersion, showering, sprinkling or coating using an absorbent paper.

26. Method according to any one of claims 22 to 25 for which the application of the composition is carried out after harvesting.

27. Method according to any one of claims 22 to 26 for which the application of the composition is carried out before harvesting by means of spraying.

28. Method for treating fruit and vegetables comprising the application to the fruit and vegetables of lecithins and/or derivatives as defined according to any one of claims 1 to 8, before, after, or at the same time as the physical treatment selected from thermotherapy, refrigeration or hydrocooling.

29. Method for preparing a composition according to any one of claims 9 to 20, comprising the addition of the lecithins or derivatives to the oil base followed by the addition of the treatment agent(s).
